# EUROPEAN PATENT SPECIFICATION

(11) **EP 4 497 970 B1**
(45) Date of publication and mention of the grant of the patent: **16.09.2026**
(21) Application number: 24189778.4
(22) Date of filing: 19.07.2024
(51) Int. Cl.: F16H 3/093, F16H 37/04, F16H 3/00

(54) **IMPROVED TRANSMISSION ARCHITECTURE FOR AGRICULTURAL VEHICLES**
VERBESSERTE GETRIEBEARCHITEKTUR FÜR LANDWIRTSCHAFTLICHE FAHRZEUGE
ARCHITECTURE DE TRANSMISSION AMÉLIORÉE POUR VÉHICULES AGRICOLES

(30) Priority: 24.07.2023 IT 202300015474
(43) Date of publication of application: 29.01.2025
(73) Proprietor: CNH Industrial Italia S.p.A., 10156 Torino (IT)
(72) Inventor: FRULLI, Alberto, 10156 Turin (IT); FIOCCHI, Francesco, 10156 Turin (IT)
(74) Representative: CNH Industrial IP Department

(56) References cited:
- EP-A2- 1 400 724
- FR-A5- 2 109 790
- US-A- 6 044 720
- US-A1- 2006 243 513

## Description

### TECHNICAL FIELD

The present invention relates to a transmission architecture, in particular a transmission architecture for an off-road vehicle such as an agricultural vehicle and to a related method for controlling the gear shifting of such transmission.

### BACKGROUND OF THE INVENTION

Transmissions for off-road vehicles such as agricultural vehicles offer different configuration, for instance:
- manual shifted transmissions, in which all gears of the transmissions are engaged directly by the driver through lever mechanisms which command clutches, synchronizers and dog clutches to select the gear;
- semi-powershift transmission, in which some gears are engaged, manually or automatically, thanks to servo actuated mechanisms in powershift mode, i.e. by swapping the torque by a couple of clutches, and in which other gears are actuated by lever mechanisms which commands clutches, synchronizers and dog clutches to select the gear or by a servo-actuated mechanism which is not in powershift mode, i.e. which uses a single clutch and, when such clutch is opened, torque cannot pass through the transmission; and
- full powershift transmission, in which all gears of the transmission are engaged through servo actuated mechanism in powershift mode.

An important request that must be satisfied in modern mechanical transmission for agricultural vehicles is to have high efficiency across the full ground speed range, in order to improve the vehicle fuel consumption. In this respect a large use of wet clutches to build the semi-powershift or the full-powershift transmissions, generates more power losses inside the transmission when compared to the use of synchronizers and dog-clutches and, as consequence, a penalty of efficiency as consequence.

For this reason, in the art, the dual-clutch transmission, DCT, architecture is considered the most valuable layout for powershift transmissions in order to satisfy all the previous demands:
- it provides a high number of speed ratios with a mechanism that allow for a comfortable powershift (by swapping one couple of clutches); and
- it performs high efficiency, because a powershift layout is provided by only few couples of wet clutches accompanied by many synchronizers and dog-clutches.

Because of these advantages, recently DCT architecture has been applied in the field of the transmissions for agricultural vehicles.

However new requirements request higher speeds of the agricultural vehicles in a wide torque range. This lead to high encumbrance and high weight transmission.

Examples of known transmission architectures are disclosed in patent publications US6044720 A, FR2109790 A5, EP1400724 A2 or US2006/243513 A1. US6044720A discloses an architecture for a dual clutch transmission for a work vehicle that comprises an input stage, a gear ratio stage and a range gear ratio stage operatively connected one to the other with respect to an input shaft and an output shaft.

Therefore, the need is felt to solve the aforementioned drawbacks in order to maintain a wide range of transmittable torque, at high speeds while reducing encumbrances of the transmission, its manufacturing time and therefore its costs.

Aim of the present invention is to satisfy the above-mentioned needs in a costeffective and optimized way.

### SUMMARY OF THE INVENTION

According to the invention, the aforementioned aim is reached by an architecture for a dual clutch transmission according to claim 1 and a related control method claim 13. The dependent claims show further advantageous embodiments of the invention.

### BRIEF DESCRIPTION OF THE DRAWINGS

For a better understanding of the present invention, a preferred embodiment is described in the following, by way of a non-limiting example, with reference to the attached drawings wherein:
- Figure 1 is a schematic representation of a transmission architecture according to the present invention;
- Figures 2 and 3 are schematic representations of the transmission architecture of figure 1 showing concerned power flows in two different exemplarily operative conditions; and
- Figure 4 is a table indicating the activation of elements of the transmission architecture according to the invention.

### DETAILED DESCRIPTION OF THE INVENTION

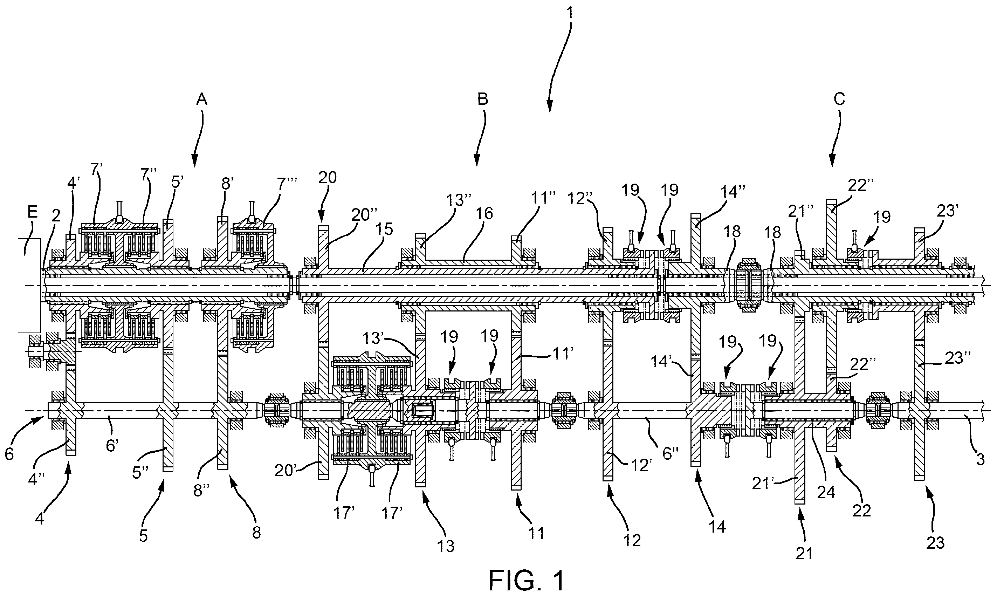

Figure 1 discloses a transmission 1 for an off-road vehicle, such as an agricultural vehicle, e.g. a tractor (not illustrated), comprising an input shaft 2, operatively connected to an engine shaft carried by a torque source E, such as an internal combustion engine of the work vehicle, and an output shaft 3, which can be coupled to a drive axle of the off-road vehicle.

The transmission 1 essentially comprises, operatively connected in series one to the other between input shaft 2 and output shaft 3, an input stage A, a gear ratio stage B, and a range gear ratio stage C.

The input stage A may be realized in different manner in order to vary rotational direction of input shaft 2 towards gear ratio B, i.e. between a forward motion and a rearward motion.

According to the invention, the input stage A comprises a first and a second gearings 4, 5 selectively connectable to a first support shaft 6. The first support shaft 6 provides input torque to the gear ratio stage B and is preferably divided into two portions, namely a first portion 6' and a second portion 6" that are coaxially and rotatably independent one with respect to the other.

The first gearing 4 comprises a first wheel 4' rotatably carried by input shaft 2 ,a second wheel 4" carried in a fixed manner by the first support shaft 6 and a third wheel 4‴ operatively connecting the first and the second wheels 4', 4" while the second gearing comprises a first wheel 5' rotatably carried by input shaft 2 and a second wheel 5" carried in a fixed manner by the first support shaft 6. The first wheels 4', 5' of gearings 4, 5 are selectively fixed to the input shaft 2 via respective first and second clutch means 7', 7", namely a rearward clutch 7' and a first forward clutch 7".

The input stage further comprises a third gearing 8 comprising a first wheel 8' rotatably carried by input shaft 2 and a second wheel 8" carried in a fixed manner by the first support shaft 6 and third clutch means 7"', namely a second forward clutch 7", configured to selectively fix to input shaft 2 the first wheel 8'.

In detail, the first, second and third gearings 4, 5, 8 have different gear ratios and all insist on the first portion 6' of the first support shaft 6.

In particular, the third clutch means 7‴ are carried by the input shaft 2 such as the second clutch means 7" and the first clutch means 7' that are therefore axially aligned along the axis of the input shaft 2.

The gear ratio stage B comprises a plurality of gearings 11, 12, 13, 14 operatively interposed between the first support shaft 6 and the input shaft and having a different size one with respect to the other to define respective gear ratios between the input shaft 2 and the output shaft 3.

In particular, the gear ratio stage B defines a first, a second, a third and a fourth gear ratios between the input and the output shafts 2, 3.

Accordingly, the first support shaft 6 carries four gears 11', 12', 13', 14' and the input shaft 2 carries respective further four counter gears 11", 12", 13", 14" meshing with the four gears 11', 12', 13', 14' to define the aforementioned gearings 11, 12, 13, 14.

In particular, the first gear 11' has the biggest diameter, the fourth gear has the smallest diameter and the second and third gears 12', 13' have respective diameters comprised between the ones of first and the fourth gears 11', 14'. The respective counter gears 11", 12", 13", 14" have a diameter corresponding the four gears 11', 12', 13', 14'.

In particular, the gears 11', 12', 13', 14' are in part fixedly carried by the second portion 6" and in part rotatably carried by this latter and selectively fixable thereon via selection means 19. The counter gears 11", 12", 13", 14" are instead freely carried on the input shaft 2 via support shafts as disclosed in the following.

In detail, according to the invention:
- The gear 11' of the first gearing 11 is rotatably free carried by the second portion 6" of the first support shaft 6 and selectively connectable to this latter via selection means 19;
- The gear 13' of the third gearing 13 is rotatably free carried by at least one between the first and second portions 6', 6" of the first support shaft 6 and selectively connectable to the second portion 6" via selection means 19;
- The gears 12', 14' of the second and fourth gearings 12, 14 are fixedly carried by the second portion 6" of the first support shaft 6.

On the other side:
- The counter gears 11" and 13" of the first and second gearings 11, 13 are rotatably free carried over a second support shaft 15 and commonly carried by a common support shaft 16 that is rotatably carried over the second support shaft 15;
- The counter gear 12" of the second gearing 12 is rotatably free carried by the second support shaft 15 and selectively fixed to this latter via selection means 19;
- The counter gear 14" of the fourth gearing 14 is fixedly carried by a third support shaft 18, the third support shaft 18 is selectively fixed to the second support shaft 15 via selection means 19.

In detail, the second support shaft 15 is rotatable free carried over the input shaft 2 and is operatively connected to the first portion of the input shaft 6 as described below. The third support shaft 18 is instead operatively connected to output shaft 3 as described further.

The second support shaft 15 is connected to the first portion 6' of the first support shaft 6 via jump gearing 20 comprising a wheel 20' and a counter wheel 20"; the wheel 20' is rotatably free carried by the first portion 6' of the first support shaft 6 and the counter wheel 20" is rigidly carried by the second support shaft 15.

In detail, the gear ratio stage B comprises a fourth and a fifth clutch means 17', 17", namely a clutch and an even clutches, configured to selectively fix the third wheel 13' of the third gearing 13 and the wheel20' of the jump gearing 20 to the first portion 6' of the first support shaft.

Preferably the fourth and fifth clutch means 17', 17" are carried by the first support shaft 6, in particular by the first portion 6' thereof, and are axially faced one with respect to the other along the longitudinal axis thereof.

In further detail, the jump gearing 20 is axially interposed between the third clutch means 7‴ and the fourth and fifth clutch means 17', 17".

The range gear stage C adds a plurality of additional gear ratio that are combined with the gear ratios defined by the gear ratio stage. In the disclosed embodiment, three range gear ratio are provided.

In the disclosed embodiment, the range gear ratio stage C then comprises a first and a range gearings 21, 23 each comprising a first wheel 21', 23', and a second wheel 21", 23". In particular, first range gearing 21 is the so-called medium range, the second range gearing 23 is the so-called low range and the fast range is achieved as described below.

The first and second range gearings 21, 23 both comprises a first wheel 21', 23' and a second wheel 21', 23". The first wheel 21' of the first range gear 21 is rotatably free carried by the output shaft 3 in particular fixedly carried by an auxiliary shaft 24 rotatably free carried on the output shaft 3 while the first wheel 23' of the second range gearing 23 is rotatably free carried by the third auxiliary shaft 18. The second wheels 21" and 23" are instead fixedly carried by respectively the third auxiliary shaft 18 and by output shaft 3.

The range gear stage further comprises a gearing 22 provided with a first wheel 22' that is rigidly carried by the auxiliary shaft 24 and a second wheel 22" that is rotatably free carried over the third auxiliary shaft.

In detail, the auxiliary shaft 24 can be coupled to the output shaft via selection means 19 and similarly selection means 19 can connect together the second wheel 22" of the gearing 22 to the first wheel 23' of the first gearing 23.

The range gear stage C further comprise selection means 19 configured to connect together the output shaft 3 directly to the second portion 6" of the first support shaft 6 thereby realizing a fast range ratio.

The aforementioned selection means 19 can be realized in different manners such as synchronizer or dog clutches.

The above-described clutches 7', 7", 7"', 17', 17" and selection means 19 can be selected by respective actuators (not shown) that are controlled by an electronic control unit (not shown). The electronic control unit controls said clutches or said control means by sending control electric signals directed to the respective clutches or selection means to be controlled.

The electronic control unit can be either the ECU of the vehicle or driveline ECU of the vehicle. The electronic control unit is configured to control the above cited elements of the transmission 1 as per direct input command of the user of the vehicle or in automatic way following the shift control logic deployed into a specific software code, which can be memorized into the electronic unit.

The vehicle may be provided by a dedicated control software code in the ECU of the transmission configured to recognize signals from sensors installed on the vehicle, e.g. the torque demand at the output shaft 3 and the speed of the engine input shaft 2, and automatically define the gearshift without any user intervention.

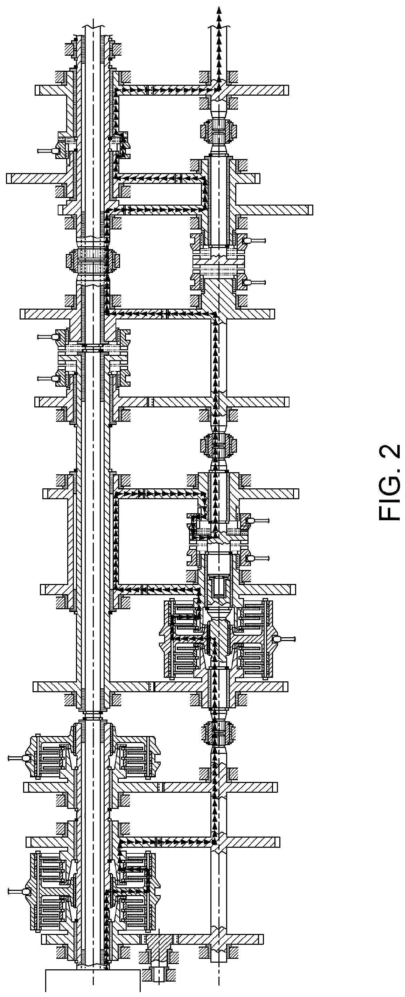

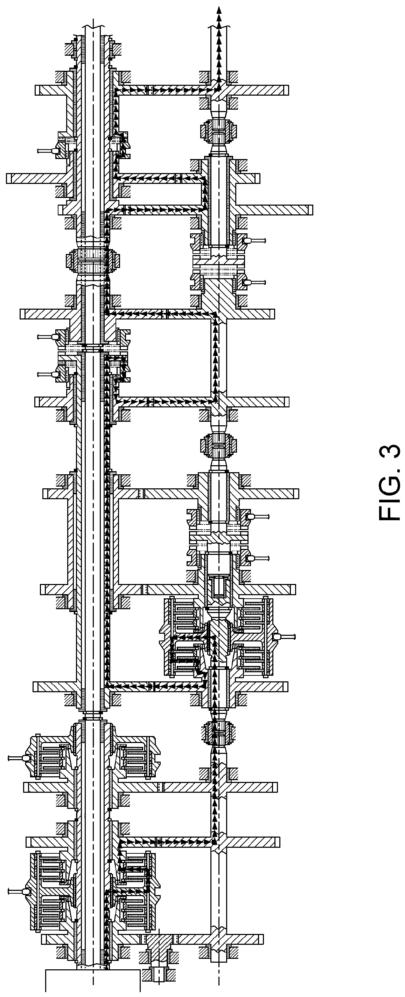

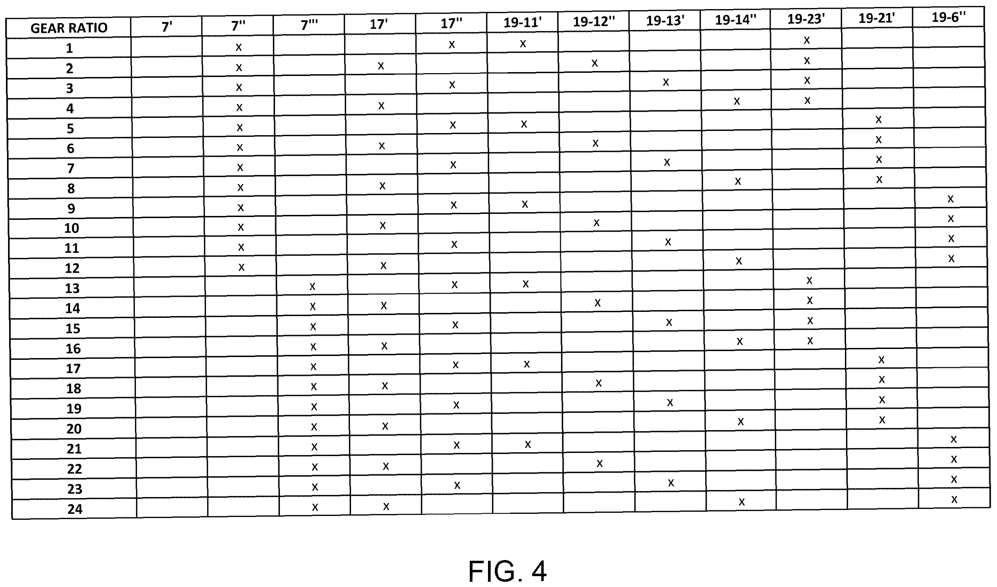

The operation of the transmission 1 according to the invention are described in the following making reference to figures 2, 3 and to table of figure 4.

The vehicle is driving, e.g. forward, in first-low gear ratio, i.e. in the configuration shown in figure 2.

In such configuration, the first forward clutch 7" couples the second gearing 5 wheels so that torque flows towards the first portion 6' of first support shaft 6, fifth clutch means 17" couples the gear 13' of the third gearing 13 and selection means 19 couples the gear 11' of the first gearing 11 so that torque passes through the common support shaft 16 to the second portion 6" of the first support shaft 6. Then since the counter wheel 22" of the second range gearing 22 is coupled to gearing 23 to output shaft, the torque flows via gearings 21, 22 and via second portion 6" of first support shaft 6 towards the output shaft 3.

Supposing to pass to in second-low gear ratio, i.e. in the configuration shown in figure 3, it is sufficient to swap fourth and fifth clutches 17', 17".

In such configuration, the first forward clutch 7" couples the second gearing 5 wheels so that torque flows towards the first portion 6' of first support shaft 6, fourth clutch means 17' couples the gear 20' of the jump gearing 20 and torque passes through the second support shaft 15 to the counter wheel 12" of the second gearing that is coupled via selection means 19 to the second support shaft 15. Then since the counter wheel 22" of the second range gearing 22 is coupled to gearing 23 to output shaft, the torque flows via gearings 21, 22 and via second portion 6" of first support shaft 6 towards the output shaft 3.

The remaining gear ratios and derivable pre-selection of gears and swap of clutches are disclosed in the summarizing table of figure 4 and are not further reported for sake of brevity.

Due to the proposed eight gears ratio and the three range gear ratio, the transmission is provided with overall twenty four gear ratios, as listed (in forward motion) and only twelve gear ratios in rearward motion due to the presence of a single rearward clutch 7'.

The invention also comprises a method for operating a transmission 1 as described above for shifting from a gear ratio of the gear ratio stage B to a requested gear ratio of the gear ratio stage B and comprising the following steps:
- i) receiving an input for shifting from a gear ratio of gear ratio stage B to a requested gear ratio of the gear ratio stage B;
- ii) if the requested gear ratio foresees the use of the same initial gear of the gear ratio stage B, then proceed to step v) otherwise proceed with steps iii) and iv);
- iii) engage by selection means 19 a further gear involved in the requested gear ratio to the second range gear shaft;
- iv) swap clutches 7', 7", 17', 17" involved in the torque transmission to pass from the initial gear to the further gear;
- v) swap clutches 7', 7", 17', 17" involved in the torque transmission to pass to the requested gear ratio.

In view of the foregoing, the advantages of a transmission architecture 1 according to the invention and the related method are apparent.

The proposed transmission architecture allows to reduce the number of shafts and in particular of countershafts that are present in the known DCT arrangement thereby providing a high number of gear ratio and reducing weight, encumbrance and costs for producing the transmission.

Indeed, with only a further forward clutch and with the arrangement of the even/odd clutches in an axial alignment, it is possible to avoid the use of countershaft and manages the torque into twenty-four gear ratios in a very compact manner.

Moreover, since shafts and gears are reduced, the overall number of components is reduced and then the manufacturing costs are contained.

Clearly, the inertia of the transmission architecture is further reduces since the torque transmission paths are shorter then the ones of known DCT arrangements.

It is clear that modifications can be applied to the described transmission 1 which do not extend beyond the scope of protection defined by the appended claims.

For example the control and typology of selection means 19 may be implemented with any typology of control, e.g. a hydraulic, electric or pneumatic in alternative or in combinations.

## Claims

1. An architecture for a dual clutch transmission (1) for a work vehicle, said architecture (1) comprising:
• an input shaft (2) configured to be coupled to a power source (E) of said work vehicle,
• an output shaft (3) configured to be connected to a driving axle of said work vehicle,
• an input stage (A), a gear ratio stage (B) and a range gear ratio stage (C) operatively connected one to the other with respect to said input shaft (2) and said output shaft (3),
wherein said input stage (A) comprises a first transmission shaft (6) comprising a first portion (6'), a first and a second gearings (4, 5) operatively interposed between the input shaft (2) and said first portion (6'), a first and a second clutches (7', 7") configured to select one between said first and second gearings (4, 5) between said input shaft (2) and said first portion (6'),
said input stage (A) further comprising a third gearing (8) operatively interposed between the input shaft (2) and said first portion (6') and third clutch means (7‴) configured to select such third gearing (8),
said gear ratio stage (B) comprise a second portion (6") of said first support shaft (6) independent to said first portion (6') and a fourth, fifth, sixth and seventh gearings (11, 12, 13, 14) operatively interposed between said second portion (6") and the input shaft (2) and operatively connected to said output shaft (3) to define different gear ratios between said input shaft (2) and said output shaft (3),
said fourth, fifth, sixth and seventh gearings (11, 12, 13, 14) comprising a fourth, fifth, sixth and seventh gears (11', 12', 13', 14') carried by said second portion (6") and respective fourth, fifth, sixth and seventh counter gears (11", 12", 13", 14") configured to mesh with said fourth, fifth, sixth and seventh gears (11', 12', 13', 14') to define different ratios, said fourth, fifth, sixth and seventh gears (11', 12', 13', 14') being in part fixedly carried by said second portion (6") and in part rotatably carried by said second portion (6") and selectively fixable to this latter via selection means (19), said fourth, fifth, sixth and seventh counter gears (11", 12", 13", 14") being rotatably carried by a second or a third support shaft (15, 18),
said third support shaft (18) being rotatably carried by said input shaft (2) and operatively connected to said output shaft (3), said second support shaft (15) being rotatably carried by said input shaft (2) and being operatively connected via a jump gearing (20) to said first portion (6') of said first support shaft (6), said jump gearing (20) comprising a jump gear (20') rotatably free carried by said first portion (6') and selectively connectable to this latter via fourth clutch means (17'),
one gear (13') among said fourth, fifth, sixth and seventh gears (11", 12", 13", 14") being selectively connectable to said first portion (6') via fifth clutch means (17"),
wherein
- the gear (11') of the fourth gearing (11) is rotatably free carried by the second portion (6") of said first support shaft (6) and selectively connectable to this latter via selection means (19);
• the gear (13') of the sixth gearing (13) is rotatably free carried by at least one between the first and second portions (6', 6") of said first support shaft (6) and selectively connectable to the second portion (6") via selection means (19);
• the gears (12', 14') of the fifth and seventh gearings (12, 14) are fixedly carried by the second portion (6") of said first support shaft (6);
and wherein:
• the counter gears (11") and (13") of the fourth and sixth gearings (11, 13) are rotatably free carried over said second support shaft (15) and commonly carried by a common support shaft (16) that is rotatably carried over the second support shaft (15);
• the counter gear (12") of the fifth gearing (12) is rotatably free carried by the second support shaft (15) and selectively fixed to this latter via selection means (19);
• the counter gear (14") of the seventh gearing (14) is fixedly carried by said third support shaft (18), the third support shaft (18) is selectively fixed to the second support shaft (15) via selection means (19).

2. Architecture according to claim 1, wherein said first, second and third clutch means (7', 7", 7‴) are coaxial to said input shaft (2).

3. Architecture according to claim 1 or 2, wherein said fourth and fifth clutch means (17', 17") are coaxial to said first support shaft (6).

4. Architecture according to any of claims 1 to 3, wherein said jump gearing (20) is axially interposed between said third clutch means (7‴) and fourth and fifth clutch means (17', 17").

5. Architecture according to any of the preceding claims, wherein said first, second and third gearings (4, 5, 8) of said input stage (A) comprise first, second and third gears (4', 5', 8') rotatably carried by said input shaft (2) and selectively fixed to this latter via a respective clutch means (7', 7", 7‴) and first, second and third counter gears (4", 5", 8") meshing with the respective first, second and third gears (4', 5', 8') to define different gear ratios, said first, second and third counter gears (4", 5", 8") are fixedly carried by said first portion (6').

6. Architecture according to any of the preceding claims, wherein said jump gearing (20) comprises a second jump gear (20") fixedly carried by said second support shaft (15).

7. Architecture according to any of claims 4 to 6, wherein said range gear stage (C) comprises a ninth and tenth gearings (21, 23), said ninth gearing (23) comprising a ninth gear (23') rotatably free carried by said third support shaft (18) and a ninth counter gear (23") fixedly carried by said output shaft (3), wherein saic tenth gearing (21) comprises a tenth gear (21') fixedly carried by an auxiliary shaft (24) that is rotatably free carried over said output shaft (3) and a tenth counter gear (21") fixedly carried by said third support shaft (18), wherein said auxiliary shaft (24) being selectively fixed to the output shaft (3) via selection means (19).

8. Architecture according to claim 7, wherein range stage (C) comprises an eleventh gearing (22) comprising an eleventh gear (22') rotatably carried by said third support shaft (18) and selectively connected to said first wheel (23') of said first gearing (23) via selection means (19) and an eleventh counter gear (22") fixedly carried by said auxiliary shaft (24).

9. Architecture according to any of claims 4 to 6, further comprising selection means (17) for selectively coupling said sleeve (23) to said output shaft (3).

10. Architecture according to any of claims 7 to 9, further comprising selection means (19) for selectively coupling said second portion (6") of said first support shaft (6) to said output shaft (3).

11. Architecture according to any of the preceding claims, wherein said selection means (19) comprises a synchronizer or a dog clutch.

12. Architecture according to any of the preceding claims further comprising a control unit configured to control actuators configured to regulate the operation of said clutch means (7', 7", 7‴, 17', 17") and said selection means (19).

13. Method for operating a transmission architecture (1) as claimed in claim 12 for shifting from a gear ratio of the gear ratio stage (B) to a requested gear ratio of the gear ratio stage (B) and comprising the following steps:
• i) receiving an input for shifting from a gear ratio of gear ratio stage (B) to a requested gear ratio of the gear ratio stage (B);
• ii) if the requested gear ratio foresees the use of the same initial gear of the gear ratio stage (B), then proceed to step v) otherwise proceed with steps iii) and iv);
• iii) engage by selection means (19) a further gear involved in the requested gear ratio to the second range gear shaft;
• iv) swap clutch means (7', 7", 7"', 17', 17") involved in the torque transmission to pass from the initial gear to the further gear;
• v) swap clutch means (7', 7", 7‴, 17', 17") involved in the torque transmission to pass to the requested gear ratio.

## Patentansprüche

1. Architektur für ein Doppelkupplungsgetriebe (1) für ein Arbeitsfahrzeug, wobei die Architektur (1) Folgendes umfasst:
• eine Antriebswelle (2), die konfiguriert ist, um an eine Energiequelle (E) des Arbeitsfahrzeugs gekoppelt zu werden,
• eine Abtriebswelle (3), die konfiguriert ist, um mit einer Antriebsachse des Arbeitsfahrzeugs verbunden zu werden,
• eine Eingangsstufe (A), eine Übersetzungsstufe (B) und eine Bereichsübersetzungsstufe (C), die bezüglich der Antriebswelle (2) und der Abtriebswelle (3) miteinander wirkverbunden sind,
wobei die Eingangsstufe (A) eine erste Getriebewelle (6), die einen ersten Abschnitt (6') umfasst, ein erstes und ein zweites Getriebe (4, 5), die funktionell zwischen der Antriebswelle (2) und dem ersten Abschnitt (6') angeordnet sind, eine erste und eine zweite Kupplung (7', 7") umfasst, die konfiguriert sind, um eines von dem ersten und zweiten Getriebe (4, 5) zwischen der Antriebswelle (2) und dem ersten Abschnitt (6') auszuwählen,
wobei die Eingangsstufe (A) ferner ein drittes Getriebe (8), das funktionell zwischen der Antriebswelle (2) und dem ersten Abschnitt (6') angeordnet ist, und dritte Kupplungsmittel (7‴) umfasst, die konfiguriert sind, um ein solches drittes Getriebe (8) auszuwählen,
wobei die Übersetzungsstufe (B) einen zweiten Abschnitt (6") der ersten Stützwelle (6) unabhängig von dem ersten Abschnitt (6') und ein viertes, fünftes, sechstes und siebtes Getriebe (11, 12, 13, 14) umfasst, die funktionell zwischen dem zweiten Abschnitt (6") und der Antriebswelle (2) angeordnet und funktionell mit der Abtriebswelle (3) verbunden sind, um unterschiedliche Übersetzungsverhältnisse zwischen der Antriebswelle (2) und der Abtriebswelle (3) zu definieren,
wobei die vierten, fünften, sechsten und siebten Getriebe (11, 12, 13, 14) ein viertes, fünftes, sechstes und siebtes Zahnrad (11', 12', 13', 14'), die von dem zweiten Abschnitt (6") getragen werden, und jeweilige vierte, fünfte, sechste und siebte Gegenzahnräder (11", 12", 13", 14") umfassen, die konfiguriert sind, um mit dem vierten, fünften, sechsten und siebten Zahnrad (11', 12', 13', 14') zu kämmen, um unterschiedliche Übersetzungsverhältnisse zu definieren, wobei das vierte, fünfte, sechste und siebte Zahnrad (11', 12', 13', 14') teilweise fest von dem zweiten Abschnitt (6") getragen werden und teilweise drehbar von dem zweiten Abschnitt (6") getragen werden und über Auswahlmittel (19) selektiv an letzterem fixierbar sind, wobei die vierten, fünften, sechsten und siebten Gegenzahnräder (11", 12", 13", 14") drehbar von einer zweiten oder einer dritten Stützwelle (15, 18) getragen werden,
wobei die dritte Stützwelle (18) drehbar von der Antriebswelle (2) getragen wird und mit der Abtriebswelle (3) wirkverbunden ist, wobei die zweite Stützwelle (15) drehbar von der Antriebswelle (2) getragen wird und über ein Sprunggetriebe (20) mit dem ersten Abschnitt (6') der ersten Stützwelle (6) wirkverbunden ist, wobei das Sprunggetriebe (20) ein Sprungrad (20') umfasst, das frei drehbar von dem ersten Abschnitt (6') getragen wird und über vierte Kupplungsmittel (17') selektiv mit letzterem verbindbar ist,
ein Zahnrad (13') von den vierten, fünften, sechsten und siebten Zahnrädern (11", 12", 13", 14") über fünfte Kupplungsmittel (17") selektiv mit dem ersten Abschnitt (6') verbindbar ist, wobei
- das Zahnrad (11') des vierten Getriebes (11) frei drehbar von dem zweiten Abschnitt (6") der ersten Stützwelle (6) getragen wird und über Auswahlmittel (19) selektiv mit letzterer verbindbar ist;
• das Zahnrad (13') des sechsten Getriebes (13) frei drehbar von mindestens einem von dem ersten und dem zweiten Abschnitt (6', 6") der ersten Stützwelle (6) getragen wird und selektiv über Auswahlmittel (19) mit dem zweiten Abschnitt (6") verbindbar ist;
• die Zahnräder (12', 14') des fünften und siebten Getriebes (12, 14) fest von dem zweiten Abschnitt (6") der ersten Stützwelle (6) getragen werden;
und wobei:
• die Gegenzahnräder (11") und (13") des vierten und sechsten Getriebes (11, 13) frei drehbar über der zweiten Stützwelle (15) getragen werden und gemeinsam von einer gemeinsamen Stützwelle (16) getragen werden, die drehbar über der zweiten Stützwelle (15) getragen wird;
• das Gegenzahnrad (12") des fünften Getriebes (12) frei drehbar von der zweiten Stützwelle (15) getragen wird und über Auswahlmittel (19) selektiv an letzterer befestigt wird;
• das Gegenzahnrad (14") des siebten Getriebes (14) fest von der dritten Stützwelle (18) getragen wird, wobei die dritte Stützwelle (18) über Auswahlmittel (19) selektiv an der zweiten Stützwelle (15) befestigt wird.

2. Architektur nach Anspruch 1, wobei die ersten, zweiten und dritten Kupplungsmittel (7', 7", 7‴) koaxial zu der Antriebswelle (2) sind.

3. Architektur nach Anspruch 1 oder 2, wobei die vierten und fünften Kupplungsmittel (17', 17") koaxial zu der ersten Stützwelle (6) sind.

4. Architektur nach einem der Ansprüche 1 bis 3, wobei das Sprunggetriebe (20) axial zwischen dem dritten Kupplungsmittel (7‴) und dem vierten und fünften Kupplungsmittel (17', 17") angeordnet ist.

5. Architektur nach einem der vorstehenden Ansprüche, wobei die ersten, zweiten und dritten Getriebe (4, 5, 8) der Eingangsstufe (A) erste, zweite und dritte Zahnräder (4', 5', 8') umfassen, die drehbar von der Antriebswelle (2) getragen werden und selektiv an letzterer über ein jeweiliges Kupplungsmittel (7', 7", 7‴) befestigt sind, und erste, zweite und dritte Gegenzahnräder (4", 5", 8"), die mit den jeweiligen ersten, zweiten und dritten Zahnrädern (4', 5', 8') kämmen, um unterschiedliche Übersetzungsverhältnisse zu definieren, wobei die ersten, zweiten und dritten Gegenzahnräder (4", 5", 8") fest von dem ersten Abschnitt (6') getragen werden.

6. Architektur nach einem der vorstehenden Ansprüche, wobei das Sprunggetriebe (20) ein zweites Sprungrad (20") umfasst, das fest von der zweiten Stützwelle (15) getragen wird.

7. Architektur nach einem der Ansprüche 4 bis 6, wobei die Bereichsübersetzungsstufe (C) ein neuntes und zehntes Getriebe (21, 23) umfasst, wobei das neunte Getriebe (23) ein neuntes Zahnrad (23') umfasst, das frei drehbar von der dritten Stützwelle (18) getragen wird, und ein neuntes Gegenzahnrad (23"), das fest von der Abtriebswelle (3) getragen wird, wobei das zehnte Getriebe (21) ein zehntes Zahnrad (21') umfasst, das fest von einer Hilfswelle (24) getragen wird, die frei drehbar über der Abtriebswelle (3) getragen wird, und ein zehntes Gegenzahnrad (21"), das fest von der dritten Stützwelle (18) getragen wird, wobei die Hilfswelle (24) über Auswahlmittel (19) selektiv an der Abtriebswelle (3) fixiert ist.

8. Architektur nach Anspruch 7, wobei Bereichsstufe (C) ein elftes Getriebe (22) umfasst, das ein elftes Zahnrad (22'), das drehbar von der dritten Stützwelle (18) getragen wird und über Auswahlmittel (19) selektiv mit dem ersten Rad (23') des ersten Getriebes (23) verbunden ist, und ein elftes Gegenzahnrad (22") umfasst, das fest von der Hilfswelle (24) getragen wird.

9. Architektur nach einem der Ansprüche 4 bis 6, ferner umfassend Auswahlmittel (17) zum selektiven Koppeln der Hülse (23) mit der Abtriebswelle (3).

10. Architektur nach einem der Ansprüche 7 bis 9, ferner umfassend Auswahlmittel (19) zum selektiven Koppeln des zweiten Abschnitts (6") der ersten Stützwelle (6) mit der Abtriebswelle (3).

11. Architektur nach einem der vorstehenden Ansprüche, wobei das Auswahlmittel (19) eine Synchronisiereinrichtung oder eine Klauenkupplung umfasst.

12. Architektur nach einem der vorstehenden Ansprüche, ferner umfassend eine Steuereinheit, die konfiguriert ist, um Aktuatoren zu steuern, die konfiguriert sind, um den Betrieb der Kupplungsmittel (7', 7", 7‴, 17', 17") und der Auswahlmittel (19) zu regeln.

13. Verfahren zum Betreiben einer Getriebearchitektur (1) nach Anspruch 12 zum Schalten von einem Übersetzungsverhältnis der Übersetzungsstufe (B) in ein angefordertes Übersetzungsverhältnis der Übersetzungsstufe (B) und umfassend die folgenden Schritte:
• i) Empfangen einer Eingabe zum Schalten von einem Übersetzungsverhältnis der Übersetzungsstufe (B) in ein angefordertes Übersetzungsverhältnis der Übersetzungsstufe (B);
• ii) wenn das angeforderte Übersetzungsverhältnis die Verwendung desselben Anfangszahnrads der Übersetzungsstufe (B) vorsieht, dann zu Schritt v) übergehen, andernfalls mit den Schritten iii) und iv) fortfahren;
• iii) durch Auswahlmittel (19) ein weiteres Zahnrad, das an dem angeforderten Übersetzungsverhältnis beteiligt ist, mit der zweiten Bereichsgetriebewelle in Eingriff bringen;
• iv) Wechseln der Kupplungsmitteln (7', 7", 7‴, 17', 17"), die an der Drehmomentübertragung beteiligt sind, um von dem Anfangszahnrad zu dem weiteren Zahnrad überzugehen;
• v) Wechseln der Kupplungsmittel (7', 7", 7‴, 17', 17"), die an der Drehmomentübertragung beteiligt sind, um zu dem angeforderten Übersetzungsverhältnis überzugehen.

## Revendications

1. Architecture pour une transmission à double embrayage (1) pour un véhicule de travail, ladite architecture (1) comprenant :
• un arbre d'entrée (2) conçu pour être accouplé à une source d'alimentation (E) dudit véhicule de travail,
• un arbre de sortie (3) conçu pour être relié à un essieu moteur dudit véhicule de travail,
• un étage d'entrée (A), un étage de rapport de vitesse (B) et un étage de rapport de vitesse de plage (C) reliés de manière fonctionnelle l'un à l'autre par rapport audit arbre d'entrée (2) et audit arbre de sortie (3),
dans laquelle ledit étage d'entrée (A) comprend un premier arbre de transmission (6) comprenant une première partie (6'), des premier et deuxième engrenages (4, 5) interposés de manière fonctionnelle entre l'arbre d'entrée (2) et ladite première partie (6'), des premier et second embrayages (7', 7") conçus pour sélectionner l'un parmi lesdits premier et deuxième engrenages (4, 5) entre ledit arbre d'entrée (2) et ladite première partie (6'),
ledit étage d'entrée (A) comprenant en outre un troisième engrenage (8) interposé de manière fonctionnelle entre l'arbre d'entrée (2) et ladite première partie (6') et un troisième moyen d'embrayage (7‴) conçu pour sélectionner un tel troisième engrenage (8),
ledit étage de rapport de vitesse (B) comprend une seconde partie (6") dudit premier arbre de support (6), indépendante de ladite première partie (6'), et un quatrième, cinquième, sixième et septième engrenages (11, 12, 13, 14) interposés de manière fonctionnelle entre ladite seconde partie (6") et l'arbre d'entrée (2) et reliés de manière fonctionnelle audit arbre de sortie (3) pour définir différents rapports de vitesse entre ledit arbre d'entrée (2) et ledit arbre de sortie (3),
lesdits quatrième, cinquième, sixième et septième engrenages (11, 12, 13, 14) comprenant des quatrième, cinquième, sixième et septième pignons (11', 12', 13', 14') portés par ladite seconde partie (6") et des quatrième, cinquième, sixième et septième pignons de renvoi (11", 12", 13", 14") respectifs conçus pour s'engrener avec lesdits quatrième, cinquième, sixième et septième pignons (11', 12', 13', 14') afin de définir des rapports différents, lesdits quatrième, cinquième, sixième et septième pignons (11', 12', 13', 14') étant en partie portés de manière fixe par ladite seconde partie (6") et en partie reçus en rotation par ladite seconde partie (6") et pouvant être fixés sélectivement à cette dernière par l'intermédiaire d'un moyen de sélection (19), lesdits quatrième, cinquième, sixième et septième pignons de renvoi (11", 12", 13", 14") étant portés de manière rotative par un deuxième ou un troisième arbre de support (15, 18),
ledit troisième arbre de support (18) étant porté de manière rotative par ledit arbre d'entrée (2) et relié de manière fonctionnelle audit arbre de sortie (3), ledit deuxième arbre de support (15) étant porté de manière rotative par ledit arbre d'entrée (2) et étant relié de manière fonctionnelle par l'intermédiaire d'un engrenage de saut (20) à ladite première partie (6') dudit premier arbre de support (6), ledit engrenage de saut (20) comprenant un pignon de saut (20') porté librement de manière rotative par ladite première partie (6') et pouvant être relié sélectivement à ce dernier par l'intermédiaire d'un quatrième moyen d'embrayage (17'),
un pignon (13') parmi lesdits quatrième, cinquième, sixième et septième pignons (11", 12", 13", 14") pouvant être sélectivement relié à ladite première partie (6') par l'intermédiaire d'un cinquième moyen d'embrayage (17"), dans laquelle
- le pignon (11') du quatrième engrenage (11) est porté librement par la seconde partie (6") dudit premier arbre de support (6) et peut être relié sélectivement à ce dernier par l'intermédiaire d'un moyen de sélection (19) ;
• le pignon (13') du sixième engrenage (13) est porté librement de manière rotative par au moins l'une parmi les première et seconde parties (6', 6") dudit premier arbre de support (6) et
peut être sélectivement relié à la seconde partie (6") par l'intermédiaire d'un moyen de sélection (19) ;
• les pignons (12', 14') des cinquième et septième engrenages (12, 14) sont portés de manière fixe par la seconde partie (6") dudit premier arbre de support (6) ;
et dans laquelle :
• les pignons de renvoi (11") et (13") des quatrième et sixième engrenages (11, 13) sont librement portés de manière rotative sur ledit second arbre de support (15) et généralement portés par un arbre de support commun (16) qui est porté de manière rotative sur le second arbre de support (15) ;
• le pignon de renvoi (12") du cinquième engrenage (12) est librement porté de manière rotative par le second arbre de support (15) et fixé sélectivement à ce dernier par l'intermédiaire d'un moyen de sélection (19) ;
• le pignon de renvoi (14") du septième engrenage (14) est porté de manière fixe par ledit troisième arbre de support (18), le troisième arbre de support (18) est sélectivement fixé au deuxième arbre de support (15) par l'intermédiaire d'un moyen de sélection (19).

2. Architecture selon la revendication 1, dans laquelle lesdits premier, deuxième et troisième moyens d'embrayage (7', 7", 7‴) sont coaxiaux audit arbre d'entrée (2).

3. Architecture selon la revendication 1 ou 2, dans laquelle lesdits quatrième et cinquième moyens d'embrayage (17', 17") sont coaxiaux audit premier arbre de support (6).

4. Architecture selon l'une quelconque des revendications 1 à 3, dans laquelle ledit engrenage de saut (20) est interposé axialement entre ledit troisième moyen d'embrayage (7‴) et les quatrième et cinquième moyens d'embrayage (17', 17").

5. Architecture selon l'une quelconque des revendications précédentes, dans laquelle lesdits premier, deuxième et troisième engrenages (4, 5, 8) dudit étage d'entrée (A) comprennent des premier, deuxième et troisième pignons (4', 5', 8') portés de manière rotative par ledit arbre d'entrée (2) et fixés sélectivement à ce dernier par l'intermédiaire d'un moyen d'embrayage respectif (7', 7", 7‴) et les premier, deuxième et troisième pignons de renvoi (4", 5", 8") s'engrènent avec les premier, deuxième et troisième pignons (4', 5', 8') respectifs pour définir des rapports de vitesse différents, lesdits premier, deuxième et troisième pignons de renvoi (4", 5", 8") sont portés de manière fixe par ladite première partie (6').

6. Architecture selon l'une quelconque des revendications précédentes, dans laquelle ledit engrenage de saut (20) comprend un second pignon de saut (20'') porté de manière fixe par ledit second arbre de support (15).

7. Architecture selon l'une quelconque des revendications 4 à 6, dans laquelle ledit étage de rapport de vitesse de plage (C) comprend des neuvième et dixième engrenages (21, 23), ledit neuvième engrenage (23) comprenant un neuvième pignon (23') librement porté par ledit troisième arbre de support (18) et un neuvième pignon de renvoi (23") porté de manière fixe par ledit arbre de sortie (3), dans laquelle ledit dixième engrenage (21) comprend un dixième pignon (21') porté de manière fixe par un arbre auxiliaire (24) qui est librement porté de manière rotative sur ledit arbre de sortie (3) et un dixième pignon de renvoi (21") porté de manière fixe par ledit troisième arbre de support (18), dans laquelle ledit arbre auxiliaire (24) est sélectivement fixé à l'arbre de sortie (3) par l'intermédiaire d'un moyen de sélection (19).

8. Architecture selon la revendication 7, dans laquelle l'étage de plage (C) comprend un onzième engrenage (22) comprenant un onzième pignon (22') porté de manière rotative par ledit troisième arbre de support (18) et relié sélectivement à ladite première roue (23') dudit premier engrenage (23) par l'intermédiaire d'un moyen de sélection (19), et un onzième pignon de renvoi (22") porté de manière fixe par ledit arbre auxiliaire (24).

9. Architecture selon l'une quelconque des revendications 4 à 6, comprenant en outre un moyen de sélection (17) permettant d'accoupler sélectivement ledit manchon (23) audit arbre de sortie (3).

10. Architecture selon l'une quelconque des revendications 7 à 9, comprenant en outre un moyen de sélection (19) permettant d'accoupler sélectivement ladite seconde partie (6") dudit premier arbre de support (6) audit arbre de sortie (3).

11. Architecture selon l'une quelconque des revendications précédentes, dans laquelle ledit moyen de sélection (19) comprend un synchroniseur ou un embrayage à griffes.

12. Architecture selon l'une quelconque des revendications précédentes, comprenant en outre une unité de commande configurée pour commander des actionneurs configurés pour réguler le fonctionnement desdits moyens d'embrayage (7', 7", 7‴, 17', 17") et dudit moyen de sélection (19).

13. Procédé permettant le fonctionnement d'une architecture de transmission (1) selon la revendication 12 pour passer d'un rapport de vitesse de l'étage de rapport de vitesse (B) à un rapport de vitesse demandé de l'étage de rapport de vitesse (B) et comprenant les étapes suivantes :
• i) la réception d'une entrée pour passer d'un rapport de vitesse de l'étage de rapport de vitesse (B) à un rapport de vitesse demandé de l'étage de rapport de vitesse (B) ;
• ii) si le rapport de vitesse demandé prévoit l'utilisation du même rapport initial de l'étage de rapport de vitesse (B), le passage à l'étape v), sinon aux étapes iii) et iv) ;
• iii) engagement, par un moyen de sélection (19), d'une autre vitesse impliquée dans le rapport de vitesse demandé au second arbre pignon de plage ;
• iv) permutation des moyens d'embrayage (7', 7", 7‴, 17', 17") impliqués dans la transmission de couple pour passer du rapport initial au rapport suivant ;
• v) permutation des moyens d'embrayage (7', 7", 7‴, 17', 17") impliqués dans la transmission de couple pour passer au rapport de vitesse demandé.
